# EUROPÄISCHE PATENTSCHRIFT

(11) **EP 2 102 131 B1**
(45) Veröffentlichungstag und Bekanntmachung des Hinweises auf die Patenterteilung: **23.03.2011**
(21) Anmeldenummer: 07847871.6
(22) Anmeldetag: 06.12.2007
(51) Int. Cl.: C04B 35/01, C04B 35/14, C04B 35/46, C04B 35/48

(54) **VERFAHREN ZUR HERSTELLUNG VON STABILEN BINDER-FREIEN HOCHREINEN FORMKÖRPERN AUS METALLOXIDEN UND DEREN ANWENDUNG**
METHOD FOR THE PRODUCTION OF STABLE BINDER-FREE HIGH-PURITY MOULDINGS COMPOSED OF METAL OXIDES AND THEIR USE
PROCÉDÉ DE FABRICATION DE CORPS MOULÉS STABLES, DE GRANDE PURETÉ ET SANS LIANT À PARTIR D'OXYDES MÉTALLIQUES ET SON UTILISATION

(30) Priorität: 13.12.2006 DE 102006058799
(43) Veröffentlichungstag der Anmeldung: 23.09.2009
(73) Patentinhaber: Wacker Chemie AG, 81737 München (DE)
(72) Erfinder: SZILLAT, Holger, 84489 Burghausen (DE)
(74) Vertreter: Gössmann, Christoph Tassilo
(86) Internationale Anmeldenummer: PCT/EP2007/063383
(87) Internationale Veröffentlichungsnummer: WO 2008/071612

(56) Entgegenhaltungen:
- EP-A- 0 172 386
- WO-A-02/100535
- DE-A1- 2 625 705
- DE-A1- 4 142 898
- DE-A1- 4 142 902
- JP-A- 2005 112 649

## Beschreibung

Die Erfindung betrifft die Herstellung von stabilen Binderfreien hochreinen Formkörpern aus Metalloxiden, insbesondere pyrogenen Metalloxiden, und deren Anwendung.

Pyrogene Metalloxide zeichnen sich durch eine extreme Feinteiligkeit, hohe spezifische Oberflächen, definierte, kugelförmige Primärteilchen mit definierter Oberflächenchemie und durch nicht vorhandene innere Oberflächen (Poren) aus. Ferner sind sie durch eine sehr hohe chemische Reinheit gekennzeichnet.

Vor dem Hintergrund der gerade skizzierten Eigenschaften finden z.B. pyrogene Siliziumdioxid zunehmend Interesse als Träger für Katalysatoren (D. Koth, H. Ferch, Chem. Ing. Techn. 52, 628 (1980)).

Aufgrund der besonderen Feinteiligkeit der pyrogenen Metalloxide gestaltet sich jedoch die Herstellung von Formkörpern aus diesen pyrogenen Metalloxiden schwierig. Die Herstellung von Formkörpern aus metalloxidischen Pulvern erfolgt in der Regel durch Pressen oder Extrusion unter Verwendung von Bindern und Gleitmitteln, um stabile Formkörper zu erhalten. Bei den Bindern und Gleitmitteln handelt es sich um anorganische und organische Zusätze.

Anorganische Zusätze, wie z.B. Magnesiumstearat, bleiben in Form von anorganischen Verbindungen, wie z.B. Magnesiumoxid, in den hergestellten Formkörpern zurück. Auch organische Zusätze können im Herstellprozess der Formkörper Verunreinigungen wie Kohlenstoff verursachen. Die gewünschte sehr hohe Reinheit der eingesetzten pyrogenen Metalloxide, wie z.B. pyrogenes SiO₂, geht in den hergestellten Formkörpern dadurch verloren.

Eine andere Kontaminationsquelle ist der Herstellungsprozess selbst. So ist bekannt, dass durch Verfahrensschritte, wie z.B. Mahlung, Verunreinigungen durch Abrieb an Mahlbehälter, Mahlwerkzeug und Mahlkugeln erzeugt und in das Mahlgut eingetragen werden. Dies geschieht auch dann, wenn Mahlbehälter, Mahlwerkzeug und Mahlkugeln aus harten Materialien bestehen, wie z.B. Si₃N₄, ZrO₂, ZrSiO₄, Al₂O₃, und ist damit zu erklären, dass es sich bei den pyrogenen Metalloxiden zumeist selbst um Materialien mit einer hohen Einzelkornhärte handelt, wie z.B. Aluminiumoxid, Siliziumdioxid, Titandioxid und Zirkondioxid.

In EP 72390 wird die Herstellung von Presslingen aus einem Gemisch von pyrogenen Metalloxiden, Wasser, Kieselsol und einem Presshilfsmittel beschrieben. Als Hilfsmittel wird ein mehrfunktioneller Alkohol (z.B. Glycerin) eingesetzt.

Aus EP 327722 ist bekannt, pyrogenes Siliziumdioxid mit Kaolin und/oder Graphit, Zucker, Stärker Harnstoff, Wachs in Wasser zu versetzen. Die Herstellung der Presslinge kann durch Einsatz von Stempelpressen, Exzenterpressen, Strangpressen, Rundlaufpressen oder Kompaktoren erfolgen. Nach EP 327815 wird analog verfahren, jedoch anstelle von pyrogenem Siliziumdioxid pyrogenes Siliziumdioxid/Aluminiumoxid-Mischoxid verwendet.

In EP 393356 wird die Herstellung von Presslingen aus pyrogenem Siliziumdioxid, Harnstoff, Methylcellulose und/oder Magnesiumstearat, Graphit, Aluminiumstearat und Wasser beschrieben.

EP 807615 beinhaltet ein Verfahren zur Herstellung von Presslingen, bestehend aus pyrogenem Siliziumdioxid, Methylcellulose, Mikrowachs und Polyethylenglykol und Wasser. Die Presslinge weisen üblicherweise Gehalte von 50-90 Gew.-% Siliziumdioxid, 0,1-20 Gew.-% Methylcellulose und 0,1-15 Gew.-% Mikrowachs und 0,1-15 Gew.-% Polyethylenglykol auf.

EP 916402 A1 beschreibt die Herstellung von Extrudaten mit einem Porenvolumen von 0,5 bis 1,8 ml/g aus pyrogenem Siliziumdioxid. Die Ausgangsmischung enthält Wasser und pyrogenes Siliziumdioxid unter Zusatz von Methylhydroxyethylcellulose, Wachs und Polyethylenglycol. Die durch Mischung erhaltene Masse wird in einem Schneckenextruder zu Extrudaten geformt.

DE OS 10247314 offenbart Formkörper auf Basis von Siliziumdioxid und/oder Titandioxid, die zusätzlich Glasfasern enthalten. Die Formkörper werden hergestellt, indem pulverförmiges Siliziumdioxid und/oder Titandioxid mit Glasfasern, Methylhydroxypropylcellulose, Wachsemulsion oder Polyethylenglycol, Polysaccharid und Polyethylenoxid unter Zusatz von Wasser homogenisiert wird. Die resultierende Masse wird zu Extrudaten geformt.

Aus DE 3912504 ist ein Verfahren zur Herstellung von Presslingen auf Basis von pyrogener Kieselsäure bekannt, bei dem man Aluminium-, Magnesiumstearat und/oder Graphit als Gleitmittel und Harnstoff sowie Methylcellulose als Porenbildner verwendet.

Nach DE4142898 ist es möglich, stabile Formkörper aus pyrogener Kieselsäure und wässrig-alkoholischer Ammoniaklösung herzustellen. Eine rein wässrige Ammoniaklösung führt dagegen nicht zum Erfolg. Durch den hohen Anteil an wässrig-alkoholischer Ammoniaklösung wird die zu formende Mischung stark alkalisch gestellt. Die Verwendung von Alkohol birgt die Gefahr von Kohlenstoff-Kontamination für den resultierenden Katalysatorträger in sich. Laut DE4142902 können stabile Formkörper aus pyrogener Kieselsäure und Ammoniaklösung bzw. aus pyrogener Kieselsäure und Alkalimetall-haltigem Kieselsol nur dann erhalten werden, wenn die Formlinge einer hydrothermalen Behandlung ausgesetzt werden. Im Fall des Ammoniakzusatzes wird die Mischung wiederum sehr alkalisch gestellt. Es ist bekannt, dass dieser Überschuss an Base (pH > 10) zum partiellen Auflösen von SiO₂ führt.

DE 2625705 beschreibt ein Verfahren zur Herstellung geformter, pelletförmiger Teilchen aus reinem, synthetischem SiO₂ zur Verwendung als Katalysatorträger. Nach Formgebung und Trocknung werden die Pellets zur Aushärtung erhitzt. Ein derartiger Formkörper hat jedoch nicht die notwendige Druckfestigkeit.

Die genannten Schriften zeigen, dass die Herstellung von stabilen Formkörpern bisher nicht ohne metallische oder organische Zusätze oder zusätzliche Verfestigungsschritte funktioniert. Daher sind im Bereich von Trägermaterialien für katalytische Anwendungen nur Formkörper bekannt, die einen nicht unerheblichen Anteil an Kontaminationen aufweisen. Als Beispiele seien die Patentschriften US2004106835 und W02006052688 genannt. Gemäß US2004106835 beträgt die Summe an Verunreinigungen über die Elemente Mg, Ca, Na, Al und Fe in einem SiO₂-Katalysatorträger bestenfalls 407 ppm. Der mit Hilfe von Patentschrift W02006052688 herstellbare SiO₂-Träger enthält weniger als 150 ppm Mg, 900 ppm Ca, 900 ppm Na, 200 ppm Al und 40 ppm Fe.

Aufgabe der Erfindung ist es, den Stand der Technik zu verbessern und insbesondere ein Verfahren zur Herstellung von Formkörpern auf Basis von Metalloxiden, insbesondere pyrogenen Metalloxiden, wie pyrogenes SiO₂, sowie Formkörper zur Verfügung zu stellen, die möglichst geringe Verunreinigungen an Metallen, Kohlenstoff, Phosphor und Schwefel und eine hohe Festigkeit aufweisen.

Gegenstand der Erfindung ist ein Verfahren zur Herstellung von Formkörpern aus einem oder mehreren Metalloxiden, dadurch gekennzeichnet, dass zumindest ein Metalloxid in Wasser vordispergiert und anschließend feindispergiert wird und diese Dispersion einer Koagulation der Dispersion durch Änderung des pH-Werts unterzogen wird und sodann eine Formgebung und ein darauf folgendes Trocknen und / oder Sintern erfolgt.

Vorzugsweise wird bei dem erfindungsgemäßen Verfahren zur Herstellung von Formkörpern aus einem oder mehreren Metalloxiden so gearbeitet, dass die Summe an Verunreinigungen (alle anderen Metalle sowie Kohlenstoff und Phosphor und Schwefel) im Formkörper kleiner 400 ppm ist.

Zur Herstellung des pyrogenen Metalloxids wird eine flüchtige Metallverbindung, wie z.B. ein Metallhalogenid oder eine Organometallverbindung, in eine Knallgasflamme aus Wasserstoff und Luft eingedüst. Diese Substanz hydrolysiert unter dem Einfluss des bei der Knallgasreaktion entstehenden Wassers zum Metalloxid. Das Metalloxid tritt nach dem Verlassen der Flamme in eine sog. Koagulationszone ein, in der die Primärteilchen und Primäraggregate agglomerieren.

Die amorphen feinkörnigen pyrogenen Metalloxide, wie z.B. pyrogenes SiO₂, weisen Aggregatgrößen von 100 nm bis 500 nm auf, gemessen mit dynamischer Lichtstreuung. Diese Metalloxide haben eine BET-Oberfläche zwischen 30 und 500 m²/g, bevorzugt zwischen 150 und 450 m²/g, ganz besonders bevorzugt zwischen 300 und 400 m²/g. Die Metalloxid-Partikel liegen in hochreiner Form vor, d.h. vorzugsweise mit einem Fremdatomanteil insbesondere an Metallen von ≤ 15 ppmw (parts per million per weight).

Vorzugsweise erfolgt die Herstellung von besonders hochreinem pyrogenem Metalloxid in Anlehnung an DE 10211958.

Der zweite Schritt betrifft die Herstellung einer homogenen Dispersion durch Dispergierung des Metalloxid-Pulvers in Wasser. Eine homogene Dispersion im Sinne der Erfindung liegt vor, wenn die Dispersion bevorzugt möglichst frei von nicht dispergierten Agglomeraten ist. In der vorliegenden Erfindung beträgt der Anteil an Agglomeraten mit Durchmessern größer 600 nm in der Dispersion weniger als 10%, bevorzugt weniger als 1%, besonders bevorzugt weniger als 0,1%, gemessen mit dynamischer Lichtstreuung an einer 0,3%igen Dispersion. Nicht dispergierte Agglomerate bewirken Inhomogenitäten im späteren keramischen Gefüge der jeweiligen Anwendung, wie z.B. als Katalysatorträger. Bei den Inhomogenitäten kann es sich z.B. um Dichteinhomogenitäten oder Inhomogenitäten in der Porendurchmesserverteilung handeln.

Die Dispergierung kann dabei mit Hilfe von verschiedenen Dispergierapparaten erfolgen. Das Metalloxid-Pulver wird zunächst mit Hilfe einer Dissolverscheibe oder Planetendissolverscheibe in Wasser eingerührt und bei einer Umfangsgeschwindigkeit von mindestens 5 m/s, vorzugsweise mindestens 8 m/s, für mindestens 25 min nachgerührt. Hierbei handelt es sich um eine Vordispergierung. Die Benetzung des Metalloxid-Pulvers durch Wasser sollte bereits hier vollständig sein. Die anschließende Feindispergierung dient der Verkleinerung von Partikeln, Aggregaten und Agglomeraten und erfolgt z.B. mittels Dissolver, Ultraschalldurchflußzelle, Planetendissolver, Nassstrahlmühle oder hochrein ausgeführter Kugelmühle für mindestens 25 min. Bevorzugt wird die Dispersion mittels Dissolver, Ultraschalldurchflußzelle, Planetendissolver oder Nassstrahlmühle für mindestens 25 min feindispergiert. Besonders bevorzugt wird die Dispersion mittels Dissolver oder Planetendissolver für mindestens 25 min bei einer Umfangsgeschwindigkeit der Dissolverscheibe von mindestens 10 m/s feindispergiert.

Entscheidend für Abriebfreiheit während des Dispergierprozesses ist die Vermeidung bzw. Hochreinausführung von Kontaktflächen zwischen Dispersion und Dispergierwerkzeug. Hochreinausführungsformen können z.B. die Verwendung von Dissolverscheiben, Mahlkugeln und Ultraschallgebern aus Quarzglas oder mit einem hochreinen harten Kunststoff beschichtete Planetenwerkzeuge sein. Die Verwendung von oxidkeramischen Mahlkugeln, wie z.B. ZrO₂, ZrSiO₄ oder Al₂O₃, als Mahlwerkzeug scheidet aus. Dagegen können besonders harte und im Hinblick auf Kontaminationen unkritische Mahlkugeln, wie z.B. aus Wolframcarbid, Siliziumcarbid oder Siliziumnitrid, Verwendung finden. Nutzt man das Prinzip des Hochenergiemahlens mittels Nassstrahlmühle, so ist eine Kontamination per definitionem ausgeschlossen. Nach diesem Prinzip werden unter hohem Druck stehende vordispergierte Dispersionsströme über eine Düse entspannt. Die Ströme treffen exakt aufeinander und die Partikel mahlen sich selbst.

Eine kleine Viskosität (z.B. < 2 Pa s) und Fließgrenze ist für eine optimale Dispergierung der Feststoffpartikel und eine homogene Dispersion wichtig. Diese können durch pH-Wert-Änderung erreicht werden. Im Fall von pyrogenem Metalloxid kann dies durch Zugabe einer Säure geschehen.

Die Dispersionen können am Ende der Dispergierung auch durch Siebung von nicht dispergierbaren, nicht benetzten und anderen Grobpartikeln befreit werden.

Für das erfindungsgemäße Verfahren wird Wasser als Dispergiermittel für die Metalloxid-Partikel eingesetzt. Organische Lösungsmittel scheiden aufgrund der Gefahr der Kohlenstoff-Kontamination aus. Besonders bevorzugt wird Wasser in hochreiner Form (Fe < 2 ppb) verwendet, wie es z.B. nach literaturbekannten Verfahren erhalten werden kann oder käuflich erhältlich ist. Vorzugsweise wird speziell gereinigtes Wasser verwendet, das einen Widerstand von ≥ 18 MegaOhm*cm hat.

Die Dispersion weist einen Anteil an pyrogenen MetalloxidPartikeln zwischen vorzugsweise 5 und 40 Gew.%, bevorzugt zwischen 10 und 30 Gew.% und besonders bevorzugt zwischen 15 und 25 Gew.% auf. Wird als Formgebung eine Tablettierung durchgeführt, wird ein deutlich höherer Feststoffgehalt bis zu 100 Gew.-% gewählt. Mischt man den pyrogenen MetalloxidPartikeln gefällte Metalloxid-Partikel bei, so kann, wie z.B. bei der Fällungskieselsäure, der Feststoffgehalt in der Dispersion bezüglich der oberen Grenze einer Dispersion von ausschließlich pyrogenen Metalloxidpartikeln in Wasser von 40 Gew.% auf bis zu 65 Gew.% erhöht werden. Bevorzugt ist hierbei ein Feststoffanteil von 5 Gew.% bis 65 Gew.%, besonders bevorzugt von 15 Gew.% bis 50 Gew.%, ganz besonders bevorzugt von 25 Gew.% bis 35 Gew.%.

Der dritte Verfahrensschritt bezieht sich auf die Koagulation der Dispersion durch pH-Wert-Änderung, vorzugsweise durch eine Einstellung auf einen pH Wert von 5,0 bis 10,0 bzw. 5,0 bis 7,5,. Die pH-Wert-Einstellung kann durch Zuhilfenahme von Basen, wie z.B. NaOH, KOH, NH₃ erfolgen. Besonders bevorzugt wird hier NH₃ eingesetzt. Die Dispersion kann durch Zusatz von NH₃ von ihrem homogenen, stabilen, dünnflüssigen Bereich in einen Bereich überführt werden, in dem die Dispersion koaguliert und sich verfestigt. Im koagulierten Zustand kann von einem viskoelastischen Festkörper gesprochen werden, d.h. der Speichermodul G' liegt höher als der Verlustmodul G".

Überraschenderweise wurde gefunden, dass die Dispersion, vorzugsweise nach wenig Zugabe von NH₃, besonders für eine Formgebung geeignet war. Ein typisches Verhältnis pyrogenes Siliziumdioxid zu 1% NH₃-Lösung beträgt 45 zu 1. Dispersionen von handelsüblichem pyrogenem Siliziumdioxid zeigen normalerweise je nach Feststoffgehalt einen pH von ca. 3 bis 5. Stabile Formkörper können dann entstehen, wenn die Dispersion auf einen pH-Bereich von vorzugsweise 5,0 bis 10,0, bevorzugt 5,5 bis 8,5, besonders bevorzugt von 6,0 bis 7,0, ganz besonders bevorzugt 5,5 bis 6,9 und ganz besonders bevorzugt 6,0 bis 6,4 eingestellt wird. Nach Einstellung auf den obigen pH-Wert zieht die Dispersion unter Rühren innerhalb von wenigen Minuten an und es entsteht eine formbare Masse mit viskoelastischem Verhalten.

Sofern es sich um Formkörper aus pyrogenem Aluminiumoxid handelt, können diese mit ausreichender Stabilität dann entstehen, wenn die Dispersion auf einen pH-Bereich von vorzugsweise 5,0 bis 7,5, bevorzugt 6,5 bis 7,5, besonders bevorzugt von 7,0 bis 7,5 eingestellt wird. Im Fall von Formkörpern aus pyrogenem Titandioxid reicht die Stabilität aus, wenn die Dispersion auf einen pH-Bereich von vorzugsweise 5,0 bis 7,5, bevorzugt 5,3 bis 6,5, besonders bevorzugt von 5,6 bis 6,0 eingestellt wird. Soll das Ziel ein stabiler Formkörper aus pyrogenem Zirkondioxid sein, wird vorher die Dispersion auf einen pH-Bereich von vorzugsweise 5,0 bis 7,5, bevorzugt 5,1 bis 6,0, besonders bevorzugt von 5,3 bis 5,7 eingestellt.

Viskoelastisches Verhalten bedeutet, dass bei einem rheologischen Deformationsversuch in Oszillation der Speichermodul G' größer als der Verlustmodul G" ist. Die Moduli G' und G" können gemäß der Gleichung τ = γ(t) * (G' sinωt + G" cosωt) bestimmt werden, wobei τ die Spannungsantwort der Probe auf die zeitliche Änderung der Deformation γ(t) bei einer Maximalamplitude γ₀ und der Winkelgeschwindigkeit ω ist, d.h. γ(t) ₌ γ₀ * sinωt. Die Bestimmung der Beträge von G' und G" erfolgt dabei im Plateaubereich des Speichermoduls G'. Der Speichermodul G' sollte im Sinne der Erfindung mindestens 10000 Pa, bevorzugt mindestens 50000 Pa, betragen, und der Quotient G"/G' sollte kleiner 1 sein, bevorzugt kleiner 0,55 und ganz besonders bevorzugt kleiner 0,25 . Der jeweilige Modul wurde mittels Platte-Platte-Geometrie mit einem Scherspalt von 1,5 mm oder in einer anderen Ausführungsform von 2 mm bei einer Temperatur von 23°C gemessen.

Der erfindungsgemäße Einsatz der erfindungsgemäßen Masse zeichnet sich durch besondere Langzeitstabilität des viskoelastischen Verhaltens aus. Dies bedeutet, dass der Speichermodul G' nach einer Lagerzeit von 1 Woche bei Raumtemperatur in einem geschlossenen Behälter maximal auf 70% des Ausgangswertes, bevorzugt maximal auf 90% des Ausgangswertes abgesunken ist, wobei der Modul mittels Platte-Platte-Geometrie mit einem Scherspalt von 1,5 mm oder in einer anderen Ausführungsform von 2,0 mm bei einer Temperatur von 23°C gemessen wurde.

Im vierten Verfahrensschritt erfolgt die Formgebung der Masse, z. B. durch vorzugsweise Extrudieren, Tablettieren oder Pressen. Hier sind alle dem Fachmann bekannten Geräte, wie Extruder, Tablettiermaschine, Kolbenstrangpresse, denkbar. Die Geometrie des Formkörpers ergibt sich aus dem jeweils gewählten Formgebungswerkzeug. Herstellbar sind Geometrien, wie Ringe, Pellets, Zylinder, Wagenräder, Kugeln, etc. Die Länge von Ringen und Pellets wird unter Verwendung einer Schneidvorrichtung direkt nach der Formgebung definiert.

Nach der Formgebung wird im fünften Verfahrensschritt die Trocknung des Formkörpers durchgeführt. Diese erfolgt mittels dem Fachmann bekannter Methoden (Trockenschrank, IR-Heizung, Mikrowelle). Die Trocknung erfolgt bei Temperaturen zwischen vorzugsweise 25°C und 200°C, bevorzugt zwischen 30°C und 100°C, ganz besonders bevorzugt zwischen 40°C und 80°C. Die Trocknungszeit hängt von dem Mengenverhältnis Metalloxid zu Wasser ab, liegt aber bevorzugt zwischen 2 und 24 Stunden.

Nach der Trocknung kann in einem letzten Schritt eine Kalzinierung des Formkörpers nach dem Fachmann bekannten Methoden erfolgen. Bevorzugt ist eine Kalzinierung in einem Ofen unter Luftatmosphäre. Der Luft kann ein weiteres Gas beigemischt werden. Hierfür kommen verschiedene Schutzgase in Frage. Als Schutzgase eignen sich alle dem Fachmann bekannten Schutzgase, besonders bevorzugt sind Stickstoff, Argon oder Helium. Die Luft kann ebenso komplett durch das Schutzgas ersetzt werden. Die Kalzinierung erfolgt bei Temperaturen zwischen 500°C und 1250°C, bevorzugt zwischen 700°C und 1100°C und besonders bevorzugt zwischen 850°C und 1000°C. Die Kalzinierzeit liegt zwischen 0,5 und 10 Stunden, eine typische Kalzinierdauer liegt bei 2 Stunden. Die Kalzinierung kann unter Normaldruck oder unter Vakuum durchgeführt werden.

Durch den Kalzinierschritt reduziert sich die Oberfläche des Katalysatorträgers, die für den katalytischen Prozess eine wichtige Größe darstellt. Da aber die erfindungsgemäßen Trägermaterialien wegen ihrer exzellenten Homogenität eine ausreichende Stabilität auch ohne Kalzinierung oder nach Kalzinierung bei niedrigen Temperaturen aufzeigen, verfügen sie neben der höheren Reinheit zudem über deutlich höhere Trägeroberflächen und Porenvolumina gegenüber dem Stand der Technik.

Ein weiterer Gegenstand ist ein stabiler, Bindemittel-freier, getrockneter und/oder gesinterter hochreiner Formkörper aus einem oder mehreren Metalloxiden, dadurch gekennzeichnet, dass die Druckfestigkeit mindestens 2 N/mm² beträgt und der Anteil an Abplatzungen in Gegenwart von Flüssigkeiten oder Gasen weniger als 5 Gew.% und die Summe an Verunreinigungen (alle Metalle sowie Kohlenstoff und Phosphor und Schwefel) kleiner 400 ppm ist.
Ihn zeichnet aus, dass er sowohl im gesinterten Zustand als auch im Grünzustand frei von anorganischen und organischen Verunreinigungen ist. Die vorliegende Erfindung betrifft einen stabilen Formkörper, dadurch gekennzeichnet, dass der Formkörper vorzugsweise eine Summe an Verunreinigungen (alle Metalle sowie Kohlenstoff und Phosphor und Schwefel) kleiner 400 ppm, bevorzugt kleiner 250 ppm, besonders bevorzugt kleiner 100 ppm, ganz besonders bevorzugt kleiner 50 ppm und ganz ganz besonders bevorzugt kleiner 20 ppm aufweist. Noch bevorzugter weist der Formkörper eine Summe an Verunreinigungen (alle Metalle sowie Phosphor und Schwefel und Kohlenstoff) kleiner 10 ppm und am bevorzugtesten kleiner 1 ppm auf.

Ferner ist der Formkörper in einer bevorzugten Ausführungsform dadurch gekennzeichnet, dass die Summe aus Schwefel und Phosphor vorzugsweise maximal 5 ppm, bevorzugt maximal 0,5 ppm beträgt. Die Kohlenstoff-Kontamination liegt vorzugsweise unterhalb von 50 ppm, bevorzugt unterhalb von 1 ppm. Der Formkörper enthält darüber hinaus maximal Verunreinigungen von vorzugsweise 80 ppm, summiert über alle Metalle, bevorzugt maximal 20 ppm.

Eine Besonderheit dieser Erfindung ist die Tatsache, dass trotz der hohen Reinheit der Masse, was normalerweise zu einer niedrigen Viskosität führt, ausgeprägt viskoelastisches Verhalten vorliegt. Im Unterschied hierzu ist nach dem Stand der Technik bekannt, dass sich insbesondere Verunreinigungen, Zusätze oder Dotierstoffe für eine Erhöhung der Viskosität und des viskoelastischen Verhaltens verantwortlich zeichnen. Hierzu zählen unter anderem die bereits zitierten Binder, aber auch metallische Verunreinigungen. Die Masse und der Formkörper sind also frei von anorganisch- und organisch-chemischen Bindern, wie z.B. Glycerin, Kaolin, Zucker, Stärke, Harnstoff, Wachs, Methylcellulose, Magnesiumstearat, Graphit, Aluminiumstearat, Polyethylenglykol, Polyethylenoxid.

Ebenso wichtig ist, dass der Formkörper im Moment der Herstellung seine durch das Formwerkzeug definierte Form behält. Verformungen während und unmittelbar nach der Formgebung bewirken Dichteunterschiede und Spannungen, die während des Trocknungs- und Sinterprozesses zu Defekten (Abplatzungen, Feinstaub) am Formkörper führen. Die hergestellten Träger weisen erfindungsgemäß einen Anteil an Abplatzungen von vorzugsweise kleiner 5 Gew.% auf, bevorzugt kleiner 1 Gew.% und ganz besonders bevorzugt kleiner 0,5 Gew.%.

Der erfindungsgemäße Formkörper kann generell in sämtlichen, dem Fachmann bekannten Verfahren oder Arbeitsschritten eingesetzt werden, in denen die Eigenschaften des Formkörpers und insbesondere des im Formkörper enthaltenen porösen Materials erwünscht sind. Besonders bevorzugt wird der erfindungsgemäße Formkörper als Katalysator bei chemischen Umsetzungen eingesetzt oder dient als Trägermaterial, auf den die jeweiligen an den Prozess angepassten Aktivkomponenten aufgebracht werden.

Der Prozess betrifft nicht nur pyrogene Metalloxide, wie pyrogenes SiO₂, Al₂O₃, ZrO₂ und TiO₂, sondern umfasst allgemein Metalloxide vom Typ SiO₂, Al₂O₃, ZrO₂ und TiO₂, wenngleich pyrogene Metalloxide wegen ihrer Feinteiligkeit bevorzugt sind.

Aufgrund der hohen Reinheit der Ausgangspulver und des hochreinen Herstellungsprozesses ist eine gezielte Dotierung jedes hochreinen Metalloxids mit jedem anderen hochreinen Metalloxid möglich, ohne dass die beanspruchte Gesamtreinheit dadurch verloren geht. Ein bevorzugtes Beispiel ist die Herstellung von aziden Katalysatorträgern durch Dotierung von pyrogenem SiO₂ mit pyrogenem Al₂O₃. Durch diese Dotierung werden im SiO₂ Lewis-saure Zentren geschaffen. In diesem Sinne können aus den vorzugsweise hochreinen Oxiden SiO₂, Al₂O₃, ZrO₂ und TiO₂ hochreine Mischoxide, die mit irgendeinem der hochreinen Oxide SiO₂, Al₂O₃, ZrO₂ und TiO₂ oder deren beliebigen Mischungen dotiert sind, erzeugt werden. Die beschriebene Gesamtreinheit bezieht sich dabei immer auf den Hauptbestandteil. Wird z.B. SiO₂ mit Al₂O₃ und TiO₂ dotiert, so sind Si und O Hauptbestandteile. Die Verunreinigungen sind dann die Elemente Kohlenstoff, Phosphor, Schwefel und alle Metalle außer Si, wobei die Summe an Verunreinigungen (alle anderen Metalle sowie Kohlenstoff und Phosphor und Schwefel) kleiner 400 ppm ist. Wird z.B. pyrogenes SiO₂ z.B. mit Fällungskieselsäure oder Fused Silica versetzt, so sind auch hier Si und O als Hauptbestandteile aufzufassen.

Die hohe Reinheit der erzeugten undotierten Formkörper erlaubt auch die Dotierung mit anderen anorganischen Dotierstoffen. Eine Bedingung ist, dass die Summe an Verunreinigungen, d.h. alle Elemente außer Si und O, immer kleiner 400 ppm, bevorzugt kleiner 250 ppm, besonders bevorzugt kleiner 100 ppm und ganz besonders bevorzugt kleiner 50 ppm beträgt. Als Dotierstoffe können anorganische Metallsalze gewählt werden. Hierbei kann es sich z.B. um Halogenide, Oxide, Nitrate, Nitrite, Silikate, Carbonate, Borate, Aluminate, Molybdate, Wolframate, Vanadate, Niobate, Tantalate, Titanate oder Zirkonate handeln. Als Gegenion zu dieser anionischen Komponente kommt prinzipiell jede kationische Spezies in Frage. Bevorzugt handelt es sich um ein Kation aus der Gruppe der Alkali- oder Erdalkaliionen. Ganz besonders bevorzugt wird ein Alkali-Kation eingesetzt.

In zwei speziellen Ausführungsformen wird hochreines SiO₂ mit hochreinem Al₂O₃ bzw. hochreines SiO₂ mit hochreinem TiO₂ in beliebigen Verhältnissen vermischt. In diesen Fällen gelten Si und Al bzw. Si und Ti als Hauptbestandteile. Als Verunreinigungen werden dann die Elemente Kohlenstoff, Phosphor, Schwefel und alle Metalle außer Si und Al bzw. Si und Ti betrachtet.

Durch die Verwendung von feinteiligen Oxiden entstehen Formkörper mit hohen Oberflächen. Die erreichten BET-Oberflächen liegen zwischen vorzugsweise 30 m²/g und 500 m²/g, bevorzugt zwischen 150 m²/g und 450 m²/g und besonders bevorzugt zwischen 250 m²/g und 400 m²/g. Die feinteiligen Oxide bewirken ferner die Herstellung eines Formkörpers mit hohem Porenvolumen, das zwischen vorzugsweise 0,5 ml/g und 1,8 ml/g, bevorzugt zwischen 0,7 ml/g und 1,25 ml/g und besonders bevorzugt zwischen 0,9 ml/g und 1,2 ml/g liegt.

Mittels Kalzinierung können aus den feinteiligen Metalloxiden feinporige Formkörper gebildet werden. Der Anteil an Poren mit einem Durchmesser zwischen 10 nm und 20 nm liegt typischerweise bei mehr als 50%, bevorzugt bei mehr als 70% und besonders bevorzugt bei mehr als 80%.

Der Formkörper hat bereits im getrockneten Grünzustand eine hohe Formstabilität und Festigkeit größer 2 N/mm², bevorzugt größer 10 N/mm², bei einer BET-Oberfläche von 50 m²/g bis 500 m²/g, bevorzugt von 250 m²/g bis 450 m²/g, bei einem Porenvolumen von 0,7 ml/g bis 1,8 ml/g, bevorzugt 1 ml/g bis 1,6 ml/g und bei einem Anteil an Poren mit Durchmessern von 20 nm bis 100 nm von mindestens 20%, bevorzugt mindestens 50%, besonders bevorzugt mindestens 75%. Im kalzinierten Zustand ist die Festigkeit höher, vorzugsweise größer 10 N/mm², bevorzugt größer 30 N/mm², besonders bevorzugt größer 100 N/mm² bei einer-BET-Oberfläche von 30 m²/g bis 400 m²/g, bei einem Porenvolumen von 0,5 ml/g bis 1,5 ml/g, bevorzugt 0,7 ml/g bis 1,2 ml/g und bei einem Anteil an Poren mit Durchmessern von 5 nm bis 20 nm von mindestens 50%, bevorzugt mindestens 75%, besonders bevorzugt mindestens 85%. Sowohl im getrockneten Grünzustand als auch im kalzinierten Zustand liegt eine monomodale Porenverteilung vor.

Formstabilität bedeutet im Sinne der Erfindung auch, dass der Träger bei Kontakt mit Gasen oder Flüssigkeiten, wie Wasser, über einen Zeitraum von mindestens 48 h maximal 5 Gew.-%, bevorzugt maximal 1 Gew.-% und besonders bevorzugt maximal 0,5 Gew.-% Abplatzungserscheinungen zeigt. Dies ist sowohl für die Imprägnierung des Trägers mit Aktivsubstanz als auch für die Anwendung in einem chemischen Reaktor wichtig. Abplatzungen können im Anwendungsfall einen hohen Druckverlust im Reaktor bewirken.

Die erfindungsgemäßen Formkörper zeichnen sich dadurch aus, dass sie ohne die übliche Zugabe von Hilfsstoffen/Additiven wie beispielsweise Extrusionshilfsmittein, Porenbildnern oder Solen hergestellt werden. Durch den Verzicht auf Hilfsstoffe kann die hohe chemische Reinheit der (beispielsweise pyrogenen) Metalloxide beibehalten werden. Die Trägerform der Materialien ist nicht entscheidend für das erfindungsgemäße Verfahren. Ob die Aktivkomponenten vor dem Formgebungsschritt der pastösen Masse zugegeben werden und damit bereits nach dem Formgebungsschritt auf dem Trägermaterial mehr oder weniger fein verteilt vorliegen oder erst nach der endgültigen Fertigstellung des Katalysatorträgers in einem nachfolgenden Prozessschritt, z. B. durch Imprägnieren, aufgebracht werden, ist für die Erfindung ebenfalls nicht entscheidend.

Ein weiterer Gegenstand der Erfindung ist ein Katalysatorträger, der ein stabiler, Bindemittel-freier, hochreiner Formkörper aus Metalloxiden ist. Dieser Formkörper dient als Träger für katalytisch aktive Substanzen. Die katalytisch aktive Substanz kann dabei entweder bereits während der Herstellung des Formkörpers zugemischt oder erst nach der Herstellung des Formkörpers, z.B. durch Imprägnierung, in den Formkörper eingebaut werden.

Zu den katalytisch aktiven Substanzen, die durch den in dieser Erfindung beschriebenen Formkörper getragen werden können, zählen Metalle, wie z.B. Pd, Au, Pt, Ru, Rh, Re, Ni, Fe, Co, Cu, Mo, Sn und Ag, Oxide, wie z.B. V₂O₅, MoO₃, WO₃, P₂O₅, Nb₂O₅, Ta₂O₅, Bi₂O₃, TiO₂, Al₉O₃, Cr₂O₃, ZrO₂, CoO, NiO, MnO₂, Fe₂O₃, Sb₂O₃, SnO₂, CeO₂, CuO, MgO und ZnO, Zeolithe, Bismuthmolybdat, K₂S₂O₇, Kupferacetylid, Phosphinkomplexe, Carbonylkomplexe, Halogenide, wie z.B. Kupferchlorid, Palladiumchlorid, Alumniumchlorid, BF₃, SbF₅, Säuren, wie z.B. HF, H₃PO₄, CF₃SO₃H, Nafion, sulfatiertes Zirkondioxid, Polysulfonsäuren und Heteropolysäuren sowie organische Verbindungen, wie z.B. Enzyme, Silane, Methylaluminoxan und Metallocene. Die hier aufgeführten Katalysatoren können alleine und in Form von beliebigen Mischungen vom Formkörper getragen werden. Der aus Trägermaterial und Aktivsubstanz bestehende Katalysator kann für verschiedene katalytisch unterstützte Reaktionen, insbesondere aber bei der chemischen Synthese, eingesetzt werden. Dies betrifft Reaktionen, wie z.B. Alkylierungen, Isomerisierungen, Polymerisationen, Hydrierungen, Oxidationsreaktionen, Hydratisierungen, Fischer-Tropsch-Synthese und Acetoxylierungen.

Der erfindungsgemäße Formkörper ist bereits im Grünzustand, also nur getrocknet und nicht kalziniert für katalytische Reaktionen anwendbar.

Die BET-Oberfläche wird bevorzugt gemäss DIN 66131 mit Stickstoff bestimmt.
Die Porenverteilung wird bevorzugt mittels Quecksilber-Porosimetrie ermittelt. Die Bestimmung des Porenvolumens erfolgt bevorzugt nach DIN 66134 (Langmuir, p/p₀= 0,9995).
Die Festigkeit wird bevorzugt mit Hilfe der Universalprüfmaschine Z 400 E mit 1 kN Kraftaufnehmer bestimmt. Die in den Beispielen angegebenen Festigkeiten wurden an liegenden und stehenden Formkörpern gemessen. Die Festigkeit wird bezogen auf die Auflagefläche des Formkörpers in mm² bei der Messung.
Die Bestimmung der viskoelastischen Funktionen G' und G " und der Viskosität wird bevorzugt unter Verwendung eines Haake RS600 Rheometers mit Platte-Platte-Anordnung bei einem Plattendurchmesser von 35 mm und einem Scherspalt von 1,5 mm oder in einer anderen Ausführungsform von 2 mm bei 23°C durchgeführt. Die Schubspannung beträgt 1 Pa. Der Meßzyklus lautet: Oszillation mit 3.183 Hz und 120 s, Rotation mit 1000 Umdrehungen in 30 s, Oszillation mit 3.183 Hz und 1000 s. Das Plateau der zweiten Oszillationsmessung wird für die Auswertung herangezogen.
Der Prozentsatz an Abplatzungen wird bevorzugt durch Siebung ermittelt. Er betrifft den Gewichtsanteil, der durch ein Taumelsieb hindurchgeht, bezogen auf das Gesamtgewicht der gewählten Formkörpercharge. Die Siebdurchtrittsfläche beträgt dabei 80% der kleinsten Formkörperfläche.
Die Messung des pH-Wertes der Metalloxid-Dispersionen erfolgt in Abwandlung der DIN 787/9 nicht an einer 5 Gew.%igen, sondern an einer 4 Gew.%igen wässrigen Dispersion.
Die Bestimmung der Verunreinigungen erfolgt bevorzugt gemäß der ICP-Analysenmethode (Inductive Coupled Plasma, Gerätetyp ICP-MS HP4500 bzw. ICP-AES Optima 3000). Die Nachweisgrenze der Methode ist kleiner als 1 ppb (ICP/MS) bzw. kleiner als 0.5 ppm (ICP/AES).
Die Bestimmung der Kohlenstoff-Verunreinigung wird bevorzugt am Leco CS230- und Leco GC-TOF-Gerät durchgeführt.

**Tabelle 1: Verunreinigungen der pyrogenen Siliziumoxide in ppb, des im jeweiligen Beispiel (B1-B16) hergestellten Trägers in ppm und der Vergleichsträger K1 (hergestellt nach US2004106835) bzw. K2 (hergestellt nach W02006052688) in ppm, ermittelt mit ICP/MS (nw = nicht nachweisbar, HB = Hauptbestandteil).**

| **Bsp.** | **Cu** | **Fe** | **Ti** | **Al** | **Ca** | **Mg** | **Na** | **K** | **Ni** | **Cr** | **C** | **P** | **S** |
|---|---|---|---|---|---|---|---|---|---|---|---|---|---|
| **HDK** | 4 | 730 | <1 | 62 | 66 | 134 | 19 | 9 | 167 | 235 | nw | 60 | nw |
| **HDKₕᵣ** | <1 | 25 | 2 | 31 | 64 | 11 | 11 | 5 | 2 | 2 | nw | nw | nw |
| **B1** | 0,01 | 1 | 0,03 | 0,3 | 0,3 | 0,2 | 0,2 | 0,1 | 0,3 | 0,3 | nw | 0,06 | nw |
| **B2** | 0,01 | 1 | 0,02 | 0,1 | 0,2 | 0,2 | 0,1 | 0,1 | 0,2 | 0,3 | nw | 0,06 | nw |
| **B3** | 0,03 | 2 | 0,05 | 0,3 | 0,4 | 0,3 | 0,3 | 0,2 | 0,5 | 0,3 | nw | 0,06 | nw |
| **B4** | 0,03 | 2 | 0,05 | 0,3 | 0,4 | 0,3 | 0,2 | 0,1 | 0,5 | 0,3 | nw | 0,06 | nw |
| **B5** | 0,01 | 0,3 | 0,01 | 0,1 | 0,1 | 0,04 | 0,1 | 0,02 | 0,08 | 0,02 | nw | 0,01 | nw |
| **B6** | 0,03 | 0,3 | 0,05 | 0,3 | 0,2 | 0,1 | 0,1 | 0,03 | 0,2 | 0,1 | nw | 0,02 | nw |
| **B7** | 0,1 | 8 | 1 | 60 | 2 | 1 | 5 | 0,5 | 1 | 1 | 10 | 0,5 | 0,5 |
| **B8** | 0,1 | 5 | 63 | 2 | 2 | 1 | 4 | 0,5 | 1 | 1 | 10 | 1 | 1 |
| **B9** | 0,1 | 5 | 5 | 3 | 4 | 1 | 5 | 1 | 1 | 1 | 10 | 0,4 | 1 |
| **B10** | 0,04 | 3 | 0,07 | 0,5 | 0,5 | 0,4 | 0,5 | 0,2 | 0,8 | 0,4 | 5 | 0,1 | 0,7 |
| **B11** | 0,03 | 1 | 0,05 | 0,2 | 0,3 | 0,2 | 0,1 | 0,1 | 0,4 | 0,1 | nw | 0,05 | nw |
| **B13** | 0,1 | 10 | 0,1 | 1 | 5 | 2 | 6 | 0,5 | 2 | 1 | 40 | 1 | 2 |
| **B14** | 0,02 | 1 | 0,04 | 0,2 | 0,2 | 0,1 | 0,1 | 0,05 | 0,3 | 0,1 | nw | 0,06 | nw |
| **B15** | 0,03 | 2 | 0,05 | 0,3 | 0,4 | 0,3 | 74 | 2 | 0,5 | 0,3 | nw | 0,06 | nw |
| **B16** | 0,03 | 2 | 0,05 | 0,3 | 0,4 | 0,3 | 3 | 70 | 0,5 | 0,3 | nw | 0,06 | nw |
| **B17** | 0,1 | 10 | 2 | HB | 5 | 3 | 10 | 0,5 | 2 | 1 | 25 | 1 | 2 |
| **B18** | 0,1 | 5 | HB | 4 | 3 | 1 | 5 | 0,5 | 1 | 1 | 20 | 1 | 1 |
| **K1** | | 10 | | 100 | 95 | 55 | 147 | | | | | | |
| **K2** | | 40 | | 200 | 900 | 150 | 900 | | | | | | |
| **B19** | 0,03 | 4 | 0,05 | 1,1 | 1,2 | 0,3 | 49 | 4 | 0,5 | 0,3 | nw | 0,06 | nw |
| **B20** | 0,03 | 3 | 0,1 | 0,4 | 0,4 | 0,3 | 0,2 | 0,1 | 0,5 | 0,3 | nw | 0,06 | nw |
| **B21** | 0,03 | 4 | 0,05 | 2 | 0,5 | 0,3 | 0,4 | 0,2 | 0,5 | 0,3 | nw | 0,06 | nw |

### Beispiele:

### Beispiel 1:

Mittels Dissolver werden 300 g pyrogenes Siliziumdioxid (BET Oberfläche 300 m²/g) in 1200 g bidest. H₂O eindispergiert. Die Dispersion wird 30 min bei einer Umfangsgeschwindigkeit der Dissolverscheibe von 12 m/s nachdispergiert. Mittels einer Ultraschalldurchflußzelle vom Typ Hielscher UP400S (400 W, 24 kHz) wird die resultierende Dispersion unter Verwendung eines Ultraschallgebers aus Quarzglas dispergiert. Die Dispersion wird dabei 20 min im Kreislauf gefahren. Der Schlicker wird in einen Planetenmischer mit 2 kunststoffbeschichteten Balkenrührern überführt. Bei 100 U/min werden 4,5 g 1% NH₃-Lösung tropfenweise dazugegeben. Nach erfolgter Zugabe wird noch 10 min nachgerührt. Dann wird die Mischung in eine Kolbenstrangpresse eingebracht. Parallel werden Rheologie und pH-Wert von einer Stichprobe gemessen: G'=60000, G " = 10000, pH=6,2.
Die Masse wird in einer Kolbenstrangpresse durch ein geeignetes Werkzeug zu den gewünschten Formen verstrangt und auf die gewünschte Länge des Formkörpers geschnitten. Die erhaltenen Formkörper - in diesem Fall Pellets mit einer Länge von 6 mm, einem Durchmesser von 6 mm - werden 24 Stunden lang bei einer Temperatur von 85 °C getrocknet. Die erfindungsgemäßen Formkörper weisen eine Oberfläche (BET-Oberfläche) von 290 m²/g und ein Porenvolumen von 1,1 ml/g auf. Die mechanische Festigkeit der Pellets beträgt 11 N/mm². Die entsprechenden Reinheitswerte sind in Tabelle 1 angegeben.

### Beispiel 2:

In einem 4 Liter Kunststoffbecher werden 1155 g bidestilliertes H₂O vorgelegt. Mit einer kunststoffbeschichteten Dissolverscheibe werden 345 g pyrogenes Siliziumdioxid (BET Oberfläche 400 m²/g) mit 1000 U/min eingerührt. Anschließend wird bei einer Umfangsgeschwindigkeit von 14 m/s 40 min nachgerührt. Der Schlicker wird in einen Planetenmischer mit 2 kunststoffbeschichteten Balkenrührern überführt. Bei 100 U/min werden 7,5 g 1% NH₃-Lösung tropfenweise dazugegeben. Nach erfolgter Zugabe wird noch 5 min nachgerührt. Dann wird die Mischung in eine Kolbenstrangpresse eingebracht. Parallel werden Rheologie und pH-Wert von einer Stichprobe gemessen: G'=200000, G"= 25000, pH=6.1.
Die Masse wird in einer Kolbenstrangpresse durch ein geeignetes Werkzeug zu den gewünschten Formen verstrangt und auf die gewünschte Länge des Formkörpers geschnitten. Die erhaltenen Formkörper - in diesem Fall Pellets mit einer Länge von 6 mm, einem Durchmesser von 6 mm - werden 24 Stunden lang bei einer Temperatur von 85 °C getrocknet. Die erfindungsgemäßen Formkörper weisen eine Oberfläche (BET-Oberfläche) von 350 m²/g und ein Porenvolumen von 1,1 ml/g auf. Die mechanische Festigkeit der Pellets beträgt 15 N/mm². Die entsprechenden Reinheitswerte sind in Tabelle 1 angegeben.

### Beispiel 3:

Die Herstellung des Trägers ist analog Beispiel B2. Im Anschluß wird der Träger noch bei 950°C gesintert. Die erfindungsgemäßen Formkörper weisen eine Oberfläche (BET-Oberfläche) von 300 m²/g und ein Porenvolumen von 1,0 ml/g auf. Die mechanische Festigkeit der Pellets beträgt 42 N/mm². Die entsprechenden Reinheitswerte sind in Tabelle 1 angegeben.

### Beispiel 4:

Die Herstellung des Trägers ist analog Beispiel B2. Im Anschluss wird der Träger noch bei 1060°C gesintert. Die erfindungsgemäßen Formkörper weisen eine Oberfläche (BET-Oberfläche) von 205 m²/g und ein Porenvolumen von 0,75 ml/g auf. Die mechanische Festigkeit der Pellets beträgt 261 N/mm². Die entsprechenden Reinheitswerte sind in Tabelle 1 angegeben.

### Beispiel 5:

In einem 4 Liter Kunststoffbecher werden 1140 g bidestilliertes H₂O vorgelegt. Mit einer Dissolverscheibe aus Quarzglas werden 360 g pyrogenes Siliziumdioxid (BET Oberfläche 400 m²/g, hergestellt nach Wa 10203, hochrein) mit 800 U/min eingerührt. Anschließend wird bei einer Umfangsgeschwindigkeit von 12 m/s der Dissolverscheibe 40 min nachgerührt. Der Schlicker wird in einen Planetenmischer mit 2 kunststoffbeschichteten Balkenrührern überführt. Bei 100 U/min werden 8,5 g 1% NH₃-Lösung tropfenweise dazugegeben. Nach erfolgter Zugabe wird noch 3 min nachgerührt. Dann wird die Mischung in eine Kolbenstrangpresse eingebracht. Parallel werden Rheologie und pH-Wert von einer Stichprobe gemessen: G'=120000, G" = 20000, pH=6,0.
Die Masse wird in einer Kolbenstrangpresse durch ein geeignetes Werkzeug zu den gewünschten Formen verstrangt und auf die gewünschte Länge des Formkörpers von 6 mm geschnitten. Die erhaltenen Formkörper - in diesem Fall Pellets mit einer Länge von 8 mm und einem Durchmesser von 6 mm - werden 24 Stunden lang bei einer Temperatur von 85 °C getrocknet. Die erfindungsgemäßen Formkörper weisen eine Oberfläche (BET-Oberfläche) von 340 m²/g und ein Porenvolumen von 1,1 ml/g auf. Die mechanische Festigkeit der Pellets beträgt 16 N/mm². Sämtliche Herstellschritte laufen unter Reinraumbedingungen ab. Die entsprechenden Reinheitswerte sind in Tabelle 1 angegeben.

### Beispiel 6:

Die Herstellung des Trägers ist analog Beispiel B5. Im Anschluss wird der Träger noch bei 950°C angesintert. Die erfindungsgemäßen Formkörper weisen eine Oberfläche (BET-Oberfläche) von 310 m²/g und ein Porenvolumen von 1,0 ml/g auf. Die mechanische Festigkeit der Pellets beträgt 49 N/mm². Die entsprechenden Reinheitswerte sind in Tabelle 1 angegeben.

### Beispiel 7:

In einem 60 Liter Kunststoffbecher werden 23,1 kg bidestilliertes H₂O vorgelegt. Mit einer kunststoffbeschichteten Dissolverscheibe werden 6,9 kg pyrogenes Siliziumdioxid (BET Oberfläche 400 m²/g) mit 1000 U/min eingerührt. Anschließend wird bei einer Umfangsgeschwindigkeit der Dissolverscheibe von 10 m/s 25 min nachgerührt. Hierzu werden 0,5 g Aluminiumoxid vom Typ Disperal P2 (käuflich erhältlich bei der Firma Sasol) gegeben. Anschließend wird bei einer Umfangsgeschwindigkeit der Dissolverscheibe von 12 m/s 30 min nachgerührt. Der Schlicker wird in einen Planetenmischer mit 2 kunststoffbeschichteten Balkenrührern überführt. Bei 100 U/min werden 170 g 1% Nah₃-Lösung tropfenweise dazugegeben. Nach erfolgter Zugabe wird noch 5 min nachgerührt. Dann wird die Mischung in eine Kolbenstrangpresse eingebracht. Parallel werden Rheologie und pH-Wert von einer Stichprobe gemessen: G'=270000, G" = 30000, pH=6,8.
Die Masse wird in einer Kolbenstrangpresse durch ein geeignetes Werkzeug zu den gewünschten Formen verstrangt und auf die gewünschte Länge des Formkörpers geschnitten. Die erhaltenen Formkörper - in diesem Fall Pellets mit einer Länge von 6 mm und einem Durchmesser von 6 mm - werden 24 Stunden lang bei einer Temperatur von 85 °C getrocknet. Die erfindungsgemäßen Formkörper weisen eine Oberfläche (BET-Oberfläche) von 330 m²/g und ein Porenvolumen von 1,1 ml/g auf. Im Anschluss wird der Träger noch bei 1040°C gesintert. Die erfindungsgemäßen Formkörper weisen eine Oberfläche (BET-Oberfläche) von 200 m²/g und ein Porenvolumen von 0,85 ml/g auf. Die mechanische Festigkeit der Pellets beträgt 113 N/mm².

### Beispiel 8:

In einem 60 Liter Kunststoffbecher werden 23,1 kg bidestilliertes H₂O vorgelegt. Mit einer kunststoffbeschichteten Dissolverscheibe werden 6,9 kg pyrogenes Siliziumdioxid (BET Oberfläche 400 m²/g) mit 1000 U/min eingerührt. Anschließend wird bei einer Umfangsgeschwindigkeit der Dissolverscheibe von 10 m/s 25 min nachgerührt. Hierzu werden 0,5 g pyrogenes Titandioxid (BET-Oberfläche 350 m²/g) gegeben. Anschließend wird bei einer Umfangsgeschwindigkeit der Dissolverscheibe von 12 m/s 30 min nachgerührt. Der Schlicker wird in einen Planetenmischer mit 2 kunststoffbeschichteten Balkenrührern überführt. Bei 100 U/min werden 140 g 1% NH₃-Lösung tropfenweise dazugegeben. Nach erfolgter Zugabe wird noch 5 min nachgerührt. Dann wird die Mischung in eine Kolbenstrangpresse eingebracht. Parallel werden Rheologie und pH-Wert von einer Stichprobe gemessen: G'=230000, G"= 27000, pH=6,5.
Die Masse wird in einer Kolbenstrangpresse durch ein geeignetes Werkzeug zu den gewünschten Formen verstrangt und auf die gewünschte Länge des Formkörpers geschnitten. Die erhaltenen Formkörper - in diesem Fall Ringe mit einer Länge von 6 mm, einem Außendurchmesser von 6 mm und einer Bohrung von 3 mm - werden 24 Stunden lang bei einer Temperatur von 85°C getrocknet. Die erfindungsgemäßen Ringträgerkörper weisen eine BET-Oberfläche von 340 m²/g und ein Porenvolumen von 1,1 ml/g auf. Im Anschluß wird der Träger noch bei 950°C gesintert. Die erfindungsgemäßen Ringträgerkörper weisen eine Oberfläche (BET-Oberfläche) von 300 m²/g und ein Porenvolumen von 1,0 ml/g auf. Die mechanische Festigkeit der Ringe beträgt 28 N/mm².

### Beispiel 9:

In einem 60 Liter Kunststoffbecher werden 23,1 kg bidestilliertes H₂O vorgelegt. Mit einer kunststoffbeschichteten Dissolverscheibe werden 6,9 kg pyrogenes Siliziumdioxid (BET Oberfläche 400 m²/g) mit 1000 U/min eingerührt. Anschließend wird bei einer Umfangsgeschwindigkeit der Dissolverscheibe von 10 m/s 25 min nachgerührt. Hierzu werden 0,5 g pyrogenes Zirkondioxid (BET-Oberfläche 70 m²/g) gegeben. Anschließend wird bei einer Umfangsgeschwindigkeit der Dissolverscheibe von 12 m/s 30 min nachgerührt. Der Schlicker wird in einen Planetenmischer mit 2 kunststoffbeschichteten Balkenrührern überführt. Bei 100 U/min werden 120 g 1% NH₃-Lösung tropfenweise dazugegeben. Nach erfolgter Zugabe wird noch 5 min nachgerührt. Dann wird die Mischung in eine Kolbenstrangpresse eingebracht. Parallel werden Rheologie und pH-Wert von einer Stichprobe gemessen: G'=240000, G"= 28000, pH=6,2 .
Die Masse wird in einer Kolbenstrangpresse durch ein geeignetes Werkzeug zu den gewünschten Formen verstrangt und auf die gewünschte Länge des Formkörpers geschnitten. Die erhaltenen Formkörper - in diesem Fall Ringe mit einer Länge von 6 mm, einem Außendurchmesser von 6 mm und einer Bohrung von 3 mm - werden 24 Stunden lang bei einer Temperatur von 85 °C getrocknet. Die erfindungsgemäßen Ringträgerkörper weisen eine Oberfläche (BET-Oberfläche) von 310 m²/g und ein Porenvolumen von 1,1 ml/g auf. Im Anschluß wird der Träger noch bei 950°C gesintert. Die erfindungsgemäßen Ringträgerkörper weisen eine Oberfläche (BET-Oberfläche) von 280 m²/g und ein Porenvolumen von 1,0 ml/g auf. Die mechanische Festigkeit der Ringe beträgt 30 N/mm²_{.}

### Beispiel 10:

In einem 4 Liter Kunststoffbecher werden 1155 g bidestilliertes H₂O vorgelegt. Mit einer kunststoffbeschichteten Dissolverscheibe werden 310 g pyrogenes Siliziumdioxid (BET Oberfläche 400 m²/g) mit 1000 U/min eingerührt. Anschließend wird bei einer Umfangsgeschwindigkeit der Dissolverscheibe von 10 m/s 25 min nachgerührt. Hierzu werden 35 g Fällungskieselsäure vom Typ Sipernat 50S (käuflich erhältlich bei der Firma Degussa) gegeben. Anschließend wird bei einer Umfangsgeschwindigkeit der Dissolverscheibe von 10 m/s 30 min nachgerührt. Der Schlicker wird in einen Planetenmischer mit 2 kunststoffbeschichteten Balkenrührern überführt. Bei 100 U/min werden 4,5 g 1% NH₃-Lösung tropfenweise dazugegeben. Nach erfolgter Zugabe wird noch 5 min nachgerührt. Dann wird die Mischung in eine Kolbenstrangpresse eingebracht. Parallel werden Rheologie und pH-Wert von einer Stichprobe gemessen: G'=280000, G"= 31000, pH=6,6.
Die Masse wird in einer Kolbenstrangpresse durch ein geeignetes Werkzeug zu den gewünschten Formen verstrangt und auf die gewünschte Länge des Formkörpers geschnitten. Die erhaltenen Formkörper - in diesem Fall Pellets mit einer Länge von 6 mm und einem Durchmesser von 6 mm - werden 24 Stunden lang bei einer Temperatur von 85 °C getrocknet. Die erfindungsgemäßen Formkörper weisen eine Oberfläche (BET-Oberfläche) von 380 m²/g und ein Porenvolumen von 1,2 ml/g auf. Im Anschluss wird der Träger noch bei 1035°C gesintert. Die erfindungsgemäßen Formkörper weisen eine Oberfläche (BET-Oberfläche) von 230 m²/g und ein Porenvolumen von 0,9 ml/g auf. Die mechanische Festigkeit der Pellets beträgt 121 N/mm ²

### Beispiel 11:

In einem 4 Liter Kunststoffbecher werden 1155 g bidestilliertes H₂O vorgelegt. Mit einer kunststoffbeschichteten Dissolverscheibe werden 330 g pyrogenes Siliziumdioxid (BET Oberfläche 400 m²/g) mit 1000 U/min eingerührt. Anschließend wird bei einer Umfangsgeschwindigkeit der Dissolverscheibe von 10 m/s 25 min nachgerührt. Hierzu werden 50 g Fused Silica (Partikelgröße 100 µm) gegeben. Anschließend wird bei 1000 U/min 20 min nachgerührt. Der Schlicker wird in einen Planetenmischer mit 2 kunststoffbeschichteten Balkenrührern überführt. Bei 100 U/min werden 6 g 1% NH₃-Lösung tropfenweise dazugegeben. Nach erfolgter Zugabe wird noch 5 min nachgerührt. Dann wird die Mischung in eine Kolbenstrangpresse eingebracht. Parallel werden Rheologie und pH-Wert von einer Stichprobe gemessen: G'=130000, G"= 20000, pH=6,5.

Die Masse wird in einer Kolbenstrangpresse durch ein geeignetes Werkzeug zu den gewünschten Formen verstrangt und auf die gewünschte Länge des Formkörpers geschnitten. Die erhaltenen Formkörper - in diesem Fall Pellets mit einer Länge von 8 mm und einem Durchmesser von 6 mm - werden 24 Stunden lang bei einer Temperatur von 85 °C getrocknet. Die erfindungsgemäßen Formkörper weisen eine Oberfläche (BET-Oberfläche) von 300 m²/g und ein Porenvolumen von 0.9 ml/g auf. Im Anschluss wird der Träger noch bei 1050°C gesintert. Die erfindungsgemäßen Formkörper weisen eine Oberfläche (BET-Oberfläche) von 210 m²/g und ein Porenvolumen von 0,8 ml/g auf. Die mechanische Festigkeit der Pellets beträgt 155 N/mm².

### Beispiel 12:

In einem 500 ml Kunststoffbecher werden 145 g bidestilliertes H₂O vorgelegt. Mit einer kunststoffbeschichteten Dissolverscheibe werden 45 g pyrogenes Aluminiumoxid (BET Oberfläche 110 m²/g) mit 1000 U/min eingerührt. Anschließend wird bei einer Umfangsgeschwindigkeit der Dissolverscheibe von 11 m/s 40 min nachgerührt. Der Schlicker wird in einen Planetenmischer mit 2 kunststoffbeschichteten Balkenrührern überführt. Bei 100 U/min werden 1 g 1% NH₃-Lösung tropfenweise dazugegeben. Nach erfolgter Zugabe wird noch 10 min nachgerührt. Dann wird die Mischung in eine Kolbenstrangpresse eingebracht. Parallel werden Rheologie und pH-Wert von einer Stichprobe gemessen: G'=10000, G" = 800, pH=7,3 .
Die Masse wird in einer Kolbenstrangpresse durch ein geeignetes Werkzeug zu den gewünschten Formen verstrangt und auf die gewünschte Länge des Formkörpers geschnitten. Die erhaltenen Formkörper - in diesem Fall Ringe mit einer Länge von 5 mm, einem Außendurchmesser von 5 mm und einer Bohrung von 2,5 mm - werden 24 Stunden lang getrocknet bei einer Temperatur von 85 °C und einer Luftfeuchtigkeit von 50%. Die erfindungsgemäßen Ringträgerkörper weisen eine Oberfläche (BET-Oberfläche) von 100 m²/g und ein Porenvolumen von 0,75 ml/g auf. Die mechanische Festigkeit der Ringe beträgt 9 N/mm².

### Beispiel 13:

Mittels Dissolver werden 300 g pyrogenes Siliziumdioxid (BET-Oberfläche 400 m²/g) in 1200 g bidestilliertes H₂O eindispergiert. Die Dispersion wird 30 min bei einer Umfangsgeschwindigkeit der Dissolverscheibe von 12 m/s nachdispergiert. Mit Hilfe einer Rührwerkskugelmühle unter Verwendung von 2 mm Quarzglasmahlkugeln werden die Partikel in der resultierenden Dispersion bei einer Rührwinkelgeschwindigkeit von 8 m/s und einem Mahlkugelfüllgrad von 60% für 4 h gemahlen. Der Schlicker wird in einen Planetenmischer mit 2 kunststoffbeschichteten Balkenrührern überführt. Bei 100 U/min werden 3,5 g 1% NH₃-Lösung tropfenweise dazugegeben. Nach erfolgter Zugabe wird noch 10 min nachgerührt. Dann wird die Mischung in eine Kolbenstrangpresse eingebracht. Parallel werden Rheologie und pH-Wert von einer Stichprobe gemessen: G'=130000, G" = 23000, pH=6,2.
Die Masse wird in einer Kolbenstrangpresse durch ein geeignetes Werkzeug zu den gewünschten Formen verstrangt und auf die gewünschte Länge des Formkörpers geschnitten. Die erhaltenen Formkörper - in diesem Fall Pellets mit einer Länge von 6 mm und einem Durchmesser von 6 mm - werden 24 Stunden lang bei einer Temperatur von 85 °C getrocknet. Die erfindungsgemäßen Formkörper weisen eine Oberfläche (BET-Oberfläche) von 330 m²/g und ein Porenvolumen von 1,1 ml/g auf. Die mechanische Festigkeit der Pellets beträgt 22 N/mm². Die entsprechenden Reinheitswerte sind in Tabelle 1 angegeben.

### Beispiel 14 :

Mittels Dissolver werden 300 g pyrogenes Siliziumdioxid (BET-Oberfläche 400 m²/g) in 1200 g bidestilliertes H₂O eindispergiert. Die Dispersion wird 30 min bei einer Umfangsgeschwindigkeit der Dissolverscheibe von 12 m/s nachdispergiert. Mit Hilfe einer Nassstrahlmühle vom Typ Ultimaizer HJP-25050 werden die Partikel in der resultierenden Dispersion bei einem Druck von 1000 bar zerkleinert. Der Schlicker wird in einen Planetenmischer mit 2 kunststoffbeschichteten Balkenrührern überführt. Bei 100 U/min werden 4,5 g 1% NH₃-Lösung tropfenweise dazugegeben. Nach erfolgter Zugabe wird noch 5 min nachgerührt. Dann wird die Mischung in eine Kolbenstrangpresse eingebracht. Parallel werden Rheologie und pH-Wert von einer Stichprobe gemessen: G'=50000, G"= 10000, pH=6,2.
Die Masse wird in einer Kolbenstrangpresse durch ein geeignetes Werkzeug zu den gewünschten Formen verstrangt und auf die gewünschte Länge des Formkörpers geschnitten. Die erhaltenen Formkörper - in diesem Fall Pellets mit einer Länge von 6 mm und einem Durchmesser von 6 mm - werden 24 Stunden lang bei einer Temperatur von 85 °C getrocknet. Die erfindungsgemäßen Formkörper weisen eine Oberfläche (BET-Oberfläche) von 370 m²/g und ein Porenvolumen von 1,1 ml/g auf. Die mechanische Festigkeit der Pellets beträgt 17 N/mm². Die entsprechenden Reinheitswerte sind in Tabelle 1 angegeben.

### Beispiel 15:

In einem 4 Liter Kunststoffbecher werden 1155 g bidestilliertes H₂O vorgelegt. Mit einer kunststoffbeschichteten Dissolverscheibe werden 345 g pyrogenes Siliziumdioxid (BET Oberfläche 400 m²/g) mit 1000 U/min eingerührt. Anschließend wird bei einer Umfangsgeschwindigkeit der Dissolverscheibe von 10 m/s 25 min nachgerührt. Der Schlicker wird in einen Planetenmischer mit 2 kunststoffbeschichteten Balkenrührern überführt. Bei 100 U/min werden 1 g 1% NaOH-Lösung tropfenweise dazugegeben. Nach erfolgter Zugabe wird noch 10 min nachgerührt. Dann wird die Mischung in eine Kolbenstrangpresse eingebracht. Parallel werden Rheologie und pH-Wert von einer Stichprobe gemessen: G'=165000, G" = 25000, pH=5,7.
Die Masse wird in einer Kolbenstrangpresse durch ein geeignetes Werkzeug zu den gewünschten Formen verstrangt und auf die gewünschte Länge des Formkörpers geschnitten. Die erhaltenen Formkörper - in diesem Fall Ringe mit einer Länge von 5 mm, einem Außendurchmesser von 5 mm und einer Bohrung von 2,5 mm - werden 24 Stunden lang bei einer Temperatur von 85 °C getrocknet. Die erfindungsgemäßen Ringträgerkörper weisen eine Oberfläche (BET-Oberfläche) von 300 m²/g und ein Porenvolumen von 1.1 ml/g auf. Im Anschluss wird der Träger noch bei 1020°C angesintert. Die erfindungsgemäßen Ringträgerkörper weisen eine Oberfläche (BET-Oberfläche) von 240 m²/g und ein Porenvolumen von 0,9 ml/g auf. Die mechanische Festigkeit der Ringe beträgt 45 N/mm²_{.}

### Beispiel 16:

In einem 4 Liter Kunststoffbecher werden 1155 g bidestilliertes H₂O vorgelegt. Mit einer kunststoffbeschichteten Dissolverscheibe werden 345 g pyrogenes Siliziumdioxid (BET Oberfläche 200 m²/g) mit 1000 U/min eingerührt. Anschließend wird bei einer Umfangsgeschwindigkeit der Dissolverscheibe von 10 m/s 25 min nachgerührt. Der Schlicker wird in einen Planetenmischer mit 2 kunststoffbeschichteten Balkenrührern überführt. Bei 100 U/min werden 1 g 1% KOH-Lösung tropfenweise dazugegeben. Nach erfolgter Zugabe wird noch 10 min nachgerührt. Dann wird die Mischung in eine Kolbenstrangpresse eingebracht. Parallel werden Rheologie und pH-Wert von einer Stichprobe gemessen: G'=155000, G" = 25000, pH=5.8.
Die Masse wird in einer Kolbenstrangpresse durch ein geeignetes Werkzeug zu den gewünschten Formen verstrangt und auf die gewünschte Länge des Formkörpers geschnitten. Die erhaltenen Formkörper - in diesem Fall Ringe mit einer Länge von 5 mm, einem Außendurchmesser von 5 mm und einer Bohrung von 2.5 mm - werden 24 Stunden lang bei einer Temperatur von 85 °C getrocknet. Die erfindungsgemäßen Ringträgerkörper weisen eine Oberfläche (BET-Oberfläche) von 190 m²/g und ein Porenvolumen von 1.1 ml/g auf. Im Anschluss wird der Träger noch bei 1020°C angesintert. Die erfindungsgemäßen Ringträgerkörper weisen eine Oberfläche (BET-Oberfläche) von 150 m²/g und ein Porenvolumen von 0,9 ml/g auf. Die mechanische Festigkeit der Ringe beträgt 39 N/mm²_{.}

### Beispiel 17:

In einem 60 Liter Kunststoffbecher werden 23,1 kg bidestilliertes H₂O vorgelegt. Mit einer kunststoffbeschichteten Dissolverscheibe werden 4,5 kg pyrogenes Siliziumdioxid (BET-Oberfläche 400 m²/g) mit 1000 U/min eingerührt. Anschließend wird bei einer Umfangsgeschwindigkeit der Dissolverscheibe von 10 m/s 25 min nachgerührt. Hierzu werden 2.5 kg pyrogenes Aluminiumoxid (BET-Oberfläche 200 m²/g) gegeben. Anschließend wird bei einer Umfangsgeschwindigkeit der Dissolverscheibe von 12 m/s 30 min nachgerührt. Der Schlicker wird in einen Planetenmischer mit 2 kunststoffbeschichteten Balkenrührern überführt. Bei 100 U/min werden 180 g 1% NH₃-Lösung tropfenweise dazugegeben. Nach erfolgter Zugabe wird noch 5 min nachgerührt. Dann wird die Mischung in eine Kolbenstrangpresse eingebracht. Parallel werden Rheologie und pH-Wert von einer Stichprobe gemessen: G'=350000, G" = 80000, pH=7,0.
Die Masse wird in einer Kolbenstrangpresse durch ein geeignetes Werkzeug zu den gewünschten Formen verstrangt und auf die gewünschte Länge des Formkörpers geschnitten. Die erhaltenen Formkörper - in diesem Fall Ringe mit einer Länge von 6 mm und einem Außendurchmesser von 6 mm und einem Innendurchmesser von 2.5 mm - werden 24 Stunden lang bei einer Temperatur von 85 °C getrocknet. Die erfindungsgemäßen Formkörper weisen eine BET-Oberfläche von 260 m²/g und ein Porenvolumen von 1,1 ml/g auf. Im Anschluß wird der Träger noch bei 950°C gesintert. Die erfindungsgemäßen Formkörper weisen eine Oberfläche (BET-Oberfläche) von 200 m²/g und ein Porenvolumen von 1,0 ml/g auf. Die mechanische Festigkeit der Ringe beträgt 58 N/mm².

### Beispiel 18:

In einem 60 Liter Kunststoffbecher werden 23,1 kg bidestilliertes H₂O vorgelegt. Mit einer kunststoffbeschichteten Dissolverscheibe werden 5 kg pyrogenes Siliziumdioxid (BET-Oberfläche 300 m²/g) mit 1000 U/min eingerührt. Anschließend wird bei einer Umfangsgeschwindigkeit der Dissolverscheibe von 10 m/s 25 min nachgerührt. Hierzu werden 2 kg pyrogenes Titandioxid (BET-Oberfläche 300 m²/g) hinzugegeben. Anschließend wird bei einer Umfangsgeschwindigkeit der Dissolverscheibe von 12 m/s 30 min nachgerührt. Der Schlicker wird in einen Planetenmischer mit 2 kunststoffbeschichteten Balkenrührern überführt. Bei 100 U/min werden 155 g 1% NH₃-Lösung tropfenweise dazugegeben. Nach erfolgter Zugabe wird noch 5 min nachgerührt. Dann wird die Mischung in eine Kolbenstrangpresse eingebracht. Parallel werden Rheologie und pH-Wert von einer Stichprobe gemessen: G'=230000, G"= 27000, pH=5.9.
Die Masse wird in einer Kolbenstrangpresse durch ein geeignetes Werkzeug zu den gewünschten Formen verstrangt und auf die gewünschte Länge des Formkörpers geschnitten. Die erhaltenen Formkörper - in diesem Fall Ringe mit einer Länge von 6 mm, einem Außendurchmesser von 6 mm und einer Bohrung von 2.5 mm - werden 24 Stunden lang bei einer Temperatur von 85 °C getrocknet. Die erfindungsgemäßen Ringträgerkörper weisen eine Oberfläche (BET-Oberfläche) von 250 m²/g und ein Porenvolumen von 1,1 ml/g auf. Im Anschluss wird der Träger noch bei 950°C gesintert. Die erfindungsgemäßen Ringträgerkörper weisen eine Oberfläche (BET-Oberfläche) von 210 m²/g und ein Porenvolumen von 1,0 ml/g auf. Die mechanische Festigkeit der Ringe beträgt 54 N/mm².

### Beispiel 19:

In einem 4 Liter Kunststoffbecher werden 1155 g bidestilliertes H₂O vorgelegt. Mit einer kunststoffbeschichteten Dissolverscheibe werden 345 g pyrogenes Siliziumdioxid (BET Oberfläche 400 m²/g) mit 1000 U/min eingerührt. Anschließend wird bei einer Umfangsgeschwindigkeit von 14 m/s 40 min nachgerührt. Der Schlicker wird in einen Planetenmischer mit 2 kunststoffbeschichteten Balkenrührern überführt. Bei 100 U/min werden 8,5 g 1% NH₃-Lösung tropfenweise dazugegeben. Der pH-Wert der resultierenden Masse beträgt pH=6.4. Danach werden 45 mg Na₂SiO₃ hinzugegeben. Nach erfolgter Zugabe wird noch 5 min nachgerührt. Dann wird die Mischung in eine Kolbenstrangpresse eingebracht. Parallel wird die Rheologie von einer Stichprobe gemessen: G'=320000, G" = 35000.
Die Masse wird in einer Kolbenstrangpresse durch ein geeignetes Werkzeug zu den gewünschten Formen verstrangt und auf die gewünschte Länge des Formkörpers geschnitten. Die erhaltenen Formkörper - in diesem Fall Pellets mit einer Länge von 6 mm, einem Durchmesser von 6 mm - werden 24 Stunden lang bei einer Temperatur von 85 °C getrocknet. Im Anschluss wird der Formkörper noch bei 850°C gesintert. Die erfindungsgemäßen Formkörper weisen eine Oberfläche (BET-Oberfläche) von 205 m²/g und ein Porenvolumen von 0,75 ml/g auf. Die mechanische Festigkeit der Pellets beträgt 35 N/mm². Die entsprechenden Reinheitswerte sind in Tabelle 1 angegeben.

### Beispiel 20:

In einem 4 Liter Kunststoffbecher werden 1155 g bidestilliertes H₂O vorgelegt. Mit einer kunststoffbeschichteten Dissolverscheibe werden 345 g pyrogenes Siliziumdioxid (BET Oberfläche 400 m²/g) mit 1000 U/min eingerührt. Anschließend wird bei einer Umfangsgeschwindigkeit von 10 m/s 40 min nachgerührt. Der Schlicker wird in einen Planetenmischer mit 2 kunststoffbeschichteten Balkenrührern überführt. Bei 100 U/min werden 12,0 g 1% NH₃-Lösung tropfenweise dazugegeben. Nach erfolgter Zugabe wird noch 5 min nachgerührt. Dann wird die Mischung in eine Kolbenstrangpresse eingebracht. Parallel werden Rheologie und pH-Wert von einer Stichprobe gemessen: G'= 120000, G"= 15000, pH=9.5.
Die Masse wird in einer Kolbenstrangpresse durch ein geeignetes Werkzeug zu den gewünschten Formen verstrangt und auf die gewünschte Länge des Formkörpers geschnitten. Die erhaltenen Formkörper - in diesem Fall Pellets mit einer Länge von 6 mm, einem Durchmesser von 6 mm - werden 24 Stunden lang bei einer Temperatur von 85 °C getrocknet. Im Anschluss wird der Träger noch bei 1000°C gesintert. Die erfindungsgemäßen Formkörper weisen eine Oberfläche (BET-Oberfläche) von 203 m²/g und ein Porenvolumen von 0,76 ml/g auf. Die mechanische Festigkeit der Pellets beträgt 33 N/mm². Die entsprechenden Reinheitswerte sind in Tabelle 1 angegeben.

### Beispiel 21:

In einem 4 Liter Kunststoffbecher werden 1155 g bidestilliertes H₂O vorgelegt. Mit einer kunststoffbeschichteten Dissolverscheibe werden 345 g pyrogenes Siliziumdioxid (BET Oberfläche 400 m²/g) mit 1000 U/min eingerührt. Anschließend wird bei einer Umfangsgeschwindigkeit von 10 m/s 40 min nachgerührt. Der Schlicker wird in einen Planetenmischer mit 2 kunststoffbeschichteten Balkenrührern überführt. Bei 100 U/min werden 10,0 g 1% NH₃-Lösung tropfenweise dazugegeben. Nach erfolgter Zugabe wird noch 5 min nachgerührt. Dann wird die Mischung in eine Kolbenstrangpresse eingebracht. Parallel werden Rheologie und pH-Wert von einer Stichprobe gemessen: G'= 150000, G" = 21000, pH=8.5.
Die Masse wird in einer Kolbenstrangpresse durch ein geeignetes Werkzeug zu den gewünschten Formen verstrangt und auf die gewünschte Länge des Formkörpers geschnitten. Die erhaltenen Formkörper - in diesem Fall Pellets mit einer Länge von 6 mm, einem Durchmesser von 6 mm - werden 24 Stunden lang bei einer Temperatur von 85 °C getrocknet. Im Anschluss wird der Träger noch bei 1000°C gesintert. Die erfindungsgemäßen Formkörper weisen eine Oberfläche (BET-Oberfläche) von 203 m²/g und ein Porenvolumen von 0,76 ml/g auf. Die mechanische Festigkeit der Pellets beträgt 73 N/mm². Die entsprechenden Reinheitswerte sind in Tabelle 1 angegeben.

## Patentansprüche

1. Stabiler, Bindemittel-freier, getrockneter und/oder gesinterter hochreiner Formkörper aus einem oder mehreren Metalloxiden, **dadurch gekennzeichnet, dass** die Druckfestigkeit mindestens 2 N/mm² beträgt und der Anteil an Abplatzungen in Gegenwart von Flüssigkeiten oder Gasen weniger als 5 Gew.% und die Summe an Verunreinigungen (alle Metalle sowie Kohlenstoff und Phosphor und Schwefel) kleiner 400 ppm ist.

2. Stabiler, Bindemittel-freier, hochreiner Formkörper aus einem oder mehreren Metalloxiden nach Anspruch 1, **dadurch gekennzeichnet, dass** der Formkörper eine Summe an Verunreinigungen (alle anderen Metalle sowie Kohlenstoff und Phosphor und Schwefel) kleiner 250 ppm aufweist.

3. Stabiler, Bindemittel-freier, hochreiner Formkörper aus Metalloxiden nach Anspruch 1 oder 2, **dadurch gekennzeichnet, dass** das Metalloxid pyrogenes Metalloxid ist.

4. Stabiler, Bindemittel-freier, hochreiner Formkörper aus Metalloxiden nach einem oder mehreren der Ansprüche 1 bis 3, **dadurch gekennzeichnet, dass** das Metalloxid pyrogenes Siliziumdioxid ist.

5. Stabiler, Bindemittel-freier, hochreiner Formkörper aus Metalloxiden nach einem der Ansprüche 1 bis 4, **dadurch gekennzeichnet, dass** das Metalloxid die Form eines Mischoxids SiO₂/Al₂O₃ oder SiO₂/TiO₂ aufweist.

6. Stabiler, Bindemittel-freier, hochreiner Formkörper aus einem Metalloxid nach einem der Ansprüche 1 bis 5, **dadurch gekennzeichnet, dass** die BET-Oberfläche des Formkörpers zwischen 30 m²/g und 500 m²/g beträgt.

7. Stabiler, Bindemittel-freier, hochreiner Formkörper aus einem Metalloxid nach Anspruch 6, **dadurch gekennzeichnet, dass** die BET-Oberfläche des Formkörpers zwischen 50 m²/g und 500 m²/g beträgt und die Druckfestigkeit mindestens 2 N/mm² beträgt.

8. Stabiler, Bindemittel-freier, hochreiner Formkörper aus einem Metalloxid nach Anspruch 6, **dadurch gekennzeichnet, dass** die BET-Oberfläche des Formkörpers zwischen 30 m²/g und 400 m²/g beträgt und die Druckfestigkeit mindestens 10 N/mm² beträgt.

9. Verfahren zur Herstellung von Formkörpern aus einem oder mehreren Metalloxiden, **dadurch gekennzeichnet, dass** zumindest ein Metalloxid in Wasser vordispergiert und anschließend feindispergiert wird und diese Dispersion einer Koagulation der Dispersion durch Änderung des pH-Werts unterzogen wird und sodann eine Formgebung und ein darauf folgendes Trocknen und /oder Sintern erfolgt.

10. Verfahren zur Herstellung von Formkörpern nach Anspruch 9, **dadurch gekennzeichnet, dass** die Dispersion einen pH Wert von 5,0 bis 10,0 aufweist.

11. Verfahren zur Herstellung von Formkörpern nach Anspruch 9 oder 10, **dadurch gekennzeichnet, dass** das Metalloxid ein pyrogenes Metalloxid ist.

12. Verfahren zur Herstellung von Formkörpern nach einem oder mehreren der Ansprüche 9 bis 11, **dadurch gekennzeichnet, dass** das Metalloxid pyrogenes Siliziumdioxid ist.

13. Verfahren zur Herstellung von Formkörpern nach Anspruch 12, **dadurch gekennzeichnet, dass** die Dispersion einen pH Wert von 5,5 bis 10,0 aufweist.

14. Verfahren zur Herstellung von Formkörpern nach einem der Ansprüche 9 bis 12, **dadurch gekennzeichnet, dass** das Metalloxid in Form eines Mischoxids SiO₂/Al₂O₃ oder SiO₂/TiO₂ vorliegt.

15. Verfahren zur Herstellung von Formkörpern nach einem oder mehreren der Ansprüche 9 bis 14, **dadurch gekennzeichnet, dass** nach der Koagulation der Speichermodul G' größer 10000 Pa, der Quotient aus Verlustmodul G" / Speichermodul G' kleiner 1 und der Speichermodul nach einer Lagerzeit von 1 Woche größer als 70% des Ausgangswertes ist.

16. Verfahren zur Herstellung von Formkörpern nach einem oder mehreren der Ansprüche 9 bis 15, **dadurch gekennzeichnet, dass** nach dem Trocknen eine Kalzinierung erfolgt.

17. Verfahren zur Herstellung von Formkörpern aus einem oder mehreren Metalloxiden nach einem oder mehreren der Ansprüche 1 bis 16, **dadurch gekennzeichnet, dass** der Formkörper so hergestellt wird, dass die Summe an Verunreinigungen (alle anderen Metalle sowie Kohlenstoff und Phosphor und Schwefel) im Formkörper kleiner 400 ppm ist.

18. Katalysatorträger, **dadurch gekennzeichnet, dass** er ein stabiler, Bindemittel-freier, hochreiner Formkörper aus einem Metalloxid nach einem der Ansprüche 1 bis 8 ist oder hergestellt nach einem der Ansprüche 9 bis 17.

## Claims

1. Stable, binder-free, dried and/or sintered high-purity moulding composed of one or more metal oxides, **characterized in that** the compressive strength is at least 2 N/mm² and the proportion of spalling in the presence of liquids or gases is less than 5% by weight and the sum of impurities (all metals and also carbon and phosphorus and sulphur) is less than 400 ppm.

2. Stable, binder-free, high-purity moulding composed of one or more metal oxides according to Claim 1, **characterized in that** the moulding has a sum of impurities (all other metals and also carbon and phosphorus and sulphur) of less than 250 ppm.

3. Stable, binder-free, high-purity moulding composed of metal oxides according to Claim 1 or 2, **characterized in that** the metal oxide is pyrogenic metal oxide.

4. Stable, binder-free, high-purity moulding composed of metal oxides according to one or more of Claims 1 to 3, **characterized in that** the metal oxide is pyrogenic silicon dioxide.

5. Stable, binder-free, high-purity moulding composed of metal oxides according to any of Claims 1 to 4, **characterized in that** the metal oxide has the form of a SiO₂/Al₂O₃ or SiO₂/TiO₂ mixed oxide.

6. Stable, binder-free, high-purity moulding composed of a metal oxide according to any of Claims 1 to 5, **characterized in that** the BET surface area of the moulding is in the range from 30 m²/g to 500 m²/g.

7. Stable, binder-free, high-purity moulding composed of a metal oxide according to Claim 6, **characterized in that** the BET surface area of the moulding is in the range from 50 m²/g to 500 m²/g and the compressive strength is at least 2 N/mm².

8. Stable, binder-free, high-purity moulding composed of a metal oxide according to Claim 6, **characterized in that** the BET surface area of the moulding is in the range from 30 m²/g to 400 m²/g and the compressive strength is at least 10 N/mm².

9. Process for producing mouldings composed of one or more metal oxides, **characterized in that** at least one metal oxide is predispersed in water and subsequently finely dispersed, and this dispersion is subjected to coagulation of the dispersion by a change in the pH, and shaping and subsequently drying and/or sintering are then carried out.

10. Process for producing mouldings according to Claim 9, **characterized in that** the dispersion has a pH of from 5.0 to 10.0.

11. Process for producing mouldings according to Claim 9 or 10, **characterized in that** the metal oxide is a pyrogenic metal oxide.

12. Process for producing mouldings according to one or more of Claims 9 to 11, **characterized in that** the metal oxide is pyrogenic silicon dioxide.

13. Process for producing mouldings according to Claim 12, **characterized in that** the dispersion has a pH of from 5.5 to 10.0.

14. Process for producing mouldings according to any of Claims 9 to 12, **characterized in that** the metal oxide is present in the form of a SiO₂/Al₂O₃ or SiO₂/TiO₂ mixed oxide.

15. Process for producing mouldings according to one or more of Claims 9 to 14, **characterized in that** after coagulation the storage modulus G' is greater than 10 000 Pa, the ratio of loss modulus G" /storage modulus G' is less than 1 and the storage modulus after a storage time of 1 week is greater than 70% of the initial value.

16. Process for producing mouldings according to one or more of Claims 9 to 15, **characterized in that** calcination is carried out after drying.

17. Process for producing mouldings composed of one or more metal oxides according to one or more of Claims 1 to 16, **characterized in that** the moulding is produced so that the sum of impurities (all other metals and also carbon and phosphorus and sulphur) in the moulding is less than 400 ppm.

18. Catalyst support, **characterized in that** it is a stable, binder-free, high-purity moulding composed of a metal oxide according to any of Claims 1 to 8 or is produced according to any of Claims 9 to 17.

## Revendications

1. Corps moulé stable, très pur, séché et/ou fritté, exempt de liant, à base d'un ou plusieurs oxydes métalliques, **caractérisé en ce que** la résistance à la compression est d'au moins 2 N/mm² et la proportion de craquelures en présence de liquides ou de gaz est inférieure à 5 % en poids et la somme des impuretés (tous métaux ainsi que carbone et phosphore et soufre) est inférieure à 400 ppm.

2. Corps moulé stable, très pur, exempt de liant, à base d'un ou plusieurs oxydes métalliques, selon la revendication 1, **caractérisé en ce que** le corps moulé présente une somme d'impuretés (tous autres métaux ainsi que carbone et phosphore et soufre) inférieure à 250 ppm.

3. Corps moulé stable, très pur, exempt de liant, à base d'oxydes métalliques, selon la revendication 1 ou 2, **caractérisé en ce que** l'oxyde métallique est un oxyde métallique pyrogéné.

4. Corps moulé stable, très pur, exempt de liant, à base d'oxydes métalliques, selon une ou plusieurs des revendications 1 à 3, **caractérisé en ce que** l'oxyde métallique est du dioxyde de silicium pyrogéné.

5. Corps moulé stable, très pur, exempt de liant, à base d'oxydes métalliques, selon l'une quelconque des revendications 1 à 4, **caractérisé en ce que** l'oxyde métallique se trouve sous la forme d'un oxyde mixte SiO₂/Al₂O₃ ou SiO₂/TiO₂.

6. Corps moulé stable, très pur, exempt de liant, à base d'un oxyde métallique, selon l'une quelconque des revendications 1 à 5, **caractérisé en ce que** la surface BET du corps moulé est comprise entre 30 m²/g et 500 m²/g.

7. Corps moulé stable, très pur, exempt de liant, à base d'un oxyde métallique, selon la revendication 6, **caractérisé en ce que** la surface BET du corps moulé est comprise entre 50 m²/g et 500 m²/g et la résistance à la compression est d'au moins 2 N/mm².

8. Corps moulé stable, très pur, exempt de liant, à base d'un oxyde métallique, selon la revendication 6, **caractérisé en ce que** la surface BET du corps moulé est comprise entre 30 m²/g et 400 m²/g et la résistance à la compression est d'au moins 10 N/mm².

9. Procédé pour la production de corps moulés à base d'un ou plusieurs oxydes métalliques, **caractérisé en ce qu'**au moins un oxyde métallique est prédispersé et ensuite finement dispersé dans de l'eau et on soumet cette dispersion à une coagulation de la dispersion en modifiant le pH et ensuite on effectue une mise en forme et un séchage et/ou frittage subséquent.

10. Procédé pour la production de corps moulés selon la revendication 9, **caractérisé en ce que** la dispersion présente un pH de 5,0 à 10,0.

11. Procédé pour la production de corps moulés selon la revendication 9 ou 10, **caractérisé en ce que** l'oxyde métallique est un oxyde métallique pyrogéné.

12. Procédé pour la production de corps moulés selon une ou plusieurs des revendications 9 à 11, **caractérisé en ce que** l'oxyde métallique est du dioxyde de silicium pyrogéné.

13. Procédé pour la production de corps moulés selon la revendication 12, **caractérisé en ce que** la dispersion présente un pH de 5,5 à 10,0.

14. Procédé pour la production de corps moulés selon l'une quelconque des revendications 9 à 12, **caractérisé en ce que** l'oxyde métallique se trouve sous la forme d'un oxyde mixte SiO₂/Al₂O₃ ou SiO₂/TiO₂.

15. Procédé pour la production de corps moulés selon une ou plusieurs des revendications 9 à 14, **caractérisé en ce qu'**après la coagulation, le module mémoire G' est supérieur à 10 000 Pa, le quotient de module de perte G" /module mémoire G' est inférieur à 1 et le module mémoire après un temps de stockage d'une semaine est supérieur à 70 % de la valeur initiale.

16. Procédé pour la production de corps moulés selon une ou plusieurs des revendications 9 à 15, **caractérisé en ce qu'**après le séchage on effectue une calcination.

17. Procédé pour la production de corps moulés à base d'un ou plusieurs oxydes métalliques selon une ou plusieurs des revendications 1 à 16, **caractérisé en ce qu'**on produit le corps moulé de sorte que la somme des impuretés (tous autres métaux ainsi que carbone et phosphore et soufre) dans le corps moulé soit inférieure à 400 ppm.

18. Support de catalyseur, **caractérisé en ce qu'**il consiste en un corps moulé stable, très pur, exempt de liant, à base d'un oxyde métallique, selon l'une quelconque des revendications 1 à 8 ou est produit selon l'une quelconque des revendications 9 à 17.
